# EUROPÄISCHE PATENTSCHRIFT

(11) **EP 4 136 428 B1**
(45) Veröffentlichungstag und Bekanntmachung des Hinweises auf die Patenterteilung: **08.07.2026**
(21) Anmeldenummer: 21719057.8
(22) Anmeldetag: 30.03.2021
(51) Int. Cl.: B01L 3/02, B01L 9/00, G01N 1/31

(54) **VORRICHTUNG UND VERFAHREN ZUM BENETZEN VON BIOLOGISCHEM MATERIAL MIT WENIGSTENS EINER FLÜSSIGKEIT**
DEVICE AND METHOD FOR WETTING BIOLOGICAL MATERIAL WITH AT LEAST ONE LIQUID
DISPOSITIF ET PROCÉDÉ POUR HUMIDIFIER UN MATÉRIEL BIOLOGIQUE AVEC AU MOINS UN LIQUIDE

(30) Priorität: 14.04.2020 DE 102020204670
(43) Veröffentlichungstag der Anmeldung: 22.02.2023
(73) Patentinhaber: Prime23 GmbH, 8640 Rapperswil (CH)
(72) Erfinder: EINSLE, Xaver, 8725 Gebertingen (CH)
(74) Vertreter: Ullrich & Naumann PartG mbB
(86) Internationale Anmeldenummer: PCT/EP2021/058320
(87) Internationale Veröffentlichungsnummer: WO 2021/209260

(56) Entgegenhaltungen:
- EP-A2- 0 834 729
- WO-A1-2011/060387
- WO-A2-2011/067670
- GB-A- 2 402 481
- US-A1- 2017 297 015
- US-A1- 2019 368 983

## Beschreibung

Die Erfindung betrifft eine Vorrichtung zum Benetzen von biologischem Material mit wenigstens einer Flüssigkeit, mit mindestens einer Halteeinrichtung und mindestens einem Absaugmittel, wobei die Halteeinrichtung zur Aufnahme eines Objektträgers in einer Aufnahmeebene dient, wobei der Objektträger das biologische Material trägt, und wobei das Absaugmittel zum Absaugen von Flüssigkeit aus der Halteeinrichtung dient.

Des Weiteren ist ein Absaugmittel für eine Vorrichtung zum Benetzen von biologischem Material mit mindestens einer Flüssigkeit, mit einem freien Ende zum Absaugen der Flüssigkeit beschrieben.

Weiterhin betrifft die Erfindung ein Verfahren zum Benetzen von biologischem Material mit wenigstens einer Flüssigkeit.

Vorrichtungen und Verfahren der in Rede stehenden Art werden beispielsweise für die automatisierte Bearbeitung von biologischen Materialien verwendet, die auf einer Vielzahl von mikroskopischen Objektträgern befestigt sind und in Inkubationskammern einzeln prozessiert werden. Das hauptsächliche Anwendungsgebiet ist das diagnostische Fachgebiet der anatomischen Pathologie (engl.: anatomical pathology).

Eine entsprechende Vorrichtung ist beispielsweise aus der DE 10 2016 225 885 A1 bekannt. Darin ist eine spezielle Halteeinrichtung für einen Objektträger beschrieben, in welcher der Objektträger während der Prozessierung gemäß einem dafür entwickelten Protokoll, mehrfach, zu festgelegten Zeitpunkten und Arbeitsschritten in einer kontinuierlichen Bewegung um die drei Koordinatenachsen gekippt wird. Somit kann Flüssigkeit, die sich zwischen dem Objektträger und der Halteeinrichtung befindet, abfließen. Des Weiteren umfasst diese Vorrichtung einen Deckel mit einem Auslass, der als Absaugstutzen ausgebildet und im Deckel verankert ist. Das auf den Objektträger treffende Ende des Absaugstutzens ist Trichter- bzw. Trompeten-ähnlich ausgestülpt und wird beim Schließen des Deckels auf den Eckbereich des Objektträgers gedrückt. **In** der Sammelposition des Objektträgers steht der Absaugstutzen durch die Verbindung mit dem Objektträger in einer Fluidverbindung mit dem Eckbereich der Vorrichtung. Somit kann die Flüssigkeit aus dem Kapillarspalt zwischen dem Objektträger und der Bodenplatte über den Absaugstutzen abgesaugt werden. Zusätzlich wird beschrieben, das freie Ende des Absaugstutzens mit einer Aussparung zu versehen, die den Eckbereich des Objektträgers aufnehmen kann.

Sowohl diese als auch weitere bekannte Absaugsysteme können jedoch eine wiederholte, vollständige Absaugung der Flüssigkeiten aus dem Kapillarspalt zwischen der Unterseite des Objektträgers und dem Boden der Halteeinrichtung für den Objektträger nicht mit ausreichender Zuverlässigkeit gewährleisten. Dies führt u.a. dazu, dass Flüssigkeit manuell aus der Vorrichtung entnommen werden muss, oder ein falsches oder gar kein Ergebnis angezeigt wird, wodurch sich die Bearbeitung weiterer Proben verzögert.

Die US 2017/297015 A1 beschreibt generell die Befüllung der Näpfchen einer horizontal ausgerichteten Mikrotiterplatte. Weiterhin zeigt die WO 2011/067670 A2 eine Halterung für freistehende Pipetten mit speziellen Pipettenspitzen aus Glas.

Die GB 2 402 481 A beschreibt eine Vorrichtung zum Färben von biologischen Materialien, welche in einer Petrischale angeordnet sind.

Das Dokument WO 2011/060387 A1 beschreibt die Färbung von auf Objektträgern befestigtem Gewebe.

Aus der EP 0 834 729 A2 ist eine Kapillar-Kammer vorbekannt, die dazu dient, getrocknete DNA mit flüssigen Reagenzien zusammenzubringen, um eine Fluoreszenz-Markierung hervorzurufen.

Der vorliegenden Erfindung liegt daher die Aufgabe zugrunde, eine Vorrichtung der eingangs genannten Art derart auszugestalten und weiterzubilden, dass mit konstruktiv einfachen Mitteln ein störungsfreier Betrieb ermöglicht ist. Des Weiteren soll ein verbessertes Verfahren zum Benetzen von biologischem Material mit wenigstens einer Flüssigkeit angegeben werden.

Erfindungsgemäß wird die voranstehende Aufgabe durch die Merkmale des Anspruches 1 gelöst. Danach ist eine Vorrichtung zum Benetzen von biologischem Material mit wenigstens einer Flüssigkeit, mit mindestens einer Halteeinrichtung und mindestens einem Absaugmittel, wobei die Halteeinrichtung einen Boden aufweist und dazu ausgebildet ist, einen Objektträger in einer Aufnahmeebene aufzunehmen, wobei der Objektträger das biologische Material trägt, wobei das Absaugmittel zum Absaugen von Flüssigkeit aus einem Kapillarspalt zwischen dem Objektträger und dem Boden dient, und eine Stirnseite des Absaugmittels nicht parallel zu der Aufnahmeebene verläuft, dadurch gekennzeichnet, dass die Stirnseite insgesamt in einer einzigen Ebene verläuft oder dass die Stirnseite konkav oder konvex ausgebildet ist.

In erfindungsgemäßer Weise ist zunächst erkannt worden, dass das Absaugen der Flüssigkeit aus dem Kapillarspalt zwischen dem Objektträger und dem Boden der Halteeinrichtung in verblüffend einfacher Weise erheblich verbessert werden kann, wenn die Stirnseite des freien Endes des Absaugmittels - zumindest während des Absaugens - nicht parallel zu der Aufnahmeebene bzw. dem in/auf der Halteeinrichtung angeordneten Objektträger verläuft.

In weiter erfindungsgemäßer Weise ist erkannt worden, dass wenn das Absaugmittel - wie im Stand der Technik - senkrecht auf die obere Seite des Objektträgers gelenkt ist und dieser so verrutscht, dass die Öffnung in dem freien Ende des Absaugmittels blockiert wird, die Flüssigkeit nicht mehr abgesaugt werden kann. Dies kann insbesondere bei der europäischen Ausführung von Objektträger auftreten, die beispielsweise nur 25 mm breit und zugleich mit rechtwinkligen Ecken ausgebildet sind. Die erfindungsgemäße nicht-parallele Anordnung des freien Endes verhindert eine solche Blockade, da der Vakuumsog bei einem verrutschten Objektträger weiterhin durch den Spalt oder die Spalte der nicht-parallel verlaufenden Stirnseite des Absaugmittels gelenkt wird. Beispielsweise könnte sich das freie Ende des Absaugmittels in die durch eine der Seitenwände und die Rückwand der Halteeinrichtung definierte Ecke erstrecken.

Des Weiteren ist erkannt worden, dass es für das restlose Absaugen von Reagenzien aus der Halteeinrichtung von besonderer Bedeutung ist, dass die, vorzugsweise doppelte, Schrägneigung des freien Endes des Absaugmittels statisch in der definierten Schrägneigung, insbesondere x-y-Schrägneigung, in Bezug auf die Aufnahmeebene verbleibt, unabhängig davon, ob und ggf. wie stark ein Objektträger ausgelenkt wird. Eine etwaige Auslenkung des Objektträgers dient lediglich zum Sammeln der flüssigen Reagenzien in einem Absaugbereich.

Im Rahmen dieser Offenbarung ist die "Aufnahmeebene" durch die Fläche definiert, auf der der Objektträger aufgelegt wird. Hierbei handelt es sich insbesondere um den Boden der Halteeinrichtung. Sofern Auflager bzw. Auflagepunkte für den Objektträger an der Halteeinrichtung ausgebildet sind, definieren diese die Aufnahmeebene. Somit liegt ein in der Halteeinrichtung angeordneter Objektträger innerhalb der Aufnahmeebene bzw. ist zumindest parallel zu der Aufnahmeebene angeordnet. Sofern der Objektträger auslenkbar ist, hat dies keinen Einfluss auf die Definition bzw. Lage der Aufnahmeebene, die somit durch den Bereich der Halteeinrichtung definiert ist, auf dem der Objektträger im nicht ausgelenkten Zustand (Grundzustand) aufliegt. Mit anderen Worten bezieht sich der Begriff "schräg" auf die Position der Elemente der beanspruchten Vorrichtung, in der sich diese während des Absaugens befinden.

In vorteilhafter Weise kann die Stirnseite schräg gegenüber der Aufnahmeebene verlaufen. Indem die Stirnseite schräg gegenüber dem Aufnahmeebene bzw. einem auf der Halteeinrichtung angeordneten Objektträger verläuft, wird erreicht, dass ein "Festsaugen" des freien Endes des Absaugmittels verhindert wird, so dass eine ununterbrochene Fluidverbindung mit dem Kapillarspalt realisiert ist.

In weiter erfindungsgemäßer Weise verläuft die Stirnseite insgesamt in einer einzigen Ebene. Eine entsprechende Ausgestaltung weist den Vorteil auf, dass sie sich aufgrund ihrer Geometrie auch bei den bei einer solchen Vorrichtung benötigten kleinen Dimensionierungen besonders einfach realisieren lässt. Beispielsweise kann die Stirnseite an einem schlauchartigen Ende des Absaugmittels ausgebildet sein, wobei das freie Ende schräg ausgebildet bzw. abgeschnitten ist.

Entsprechend einer erfindungsgemäßen Alternative ist die Stirnseite konkav oder konvex ausgebildet. Wesentlich ist dabei, dass die Ausgestaltung und Anordnung des freien Endes derart erfolgt, dass ein Festsaugen des freien Endes verhindert und dadurch die Aufrechterhaltung des Vakuumsogs gewährleistet ist.

Gemäß einer weiteren vorteilhaften Ausgestaltung kann die Stirnseite des Absaugmittels schräg ausgebildet sein. Somit kann das Absaugmittel entsprechend der aus dem Stand der Technik bekannten Vorrichtung im Wesentlichen vertikal in die Halteeinrichtung hineinragen, wobei durch die schräge Ausgestaltung der Stirnseite gewährleistet ist, dass diese nicht parallel zu der Aufnahmeebene verläuft.

**In** besonders vorteilhafter Weise kann die Stirnseite unter einem Winkel im Bereich von 5° bis 45°, insbesondere von 5° bis 40°, vorzugsweise von 10° bis 30° gegenüber der Aufnahmeebene verlaufen. Bei einem Winkel im Bereich von 5° bis 45° wird Flüssigkeit bereits wesentlich zuverlässiger abgesaugt als bei den aus dem Stand der Technik bekannten Absaugstutzen, wobei sich die Zuverlässigkeit bei einem Winkel im Bereich von 5° bis 40° nochmals wesentlich verbessert. **In** idealer Weise kann der Winkel in einem Bereich von 10° bis 30° liegen, wodurch ein besonders störungsfreier Betrieb ermöglicht ist. Der hier beschriebene Winkel ist dabei definiert durch den Winkel zwischen dem Normalenvektor der Aufnahmeebene und dem Normalenvektor der Ebene, die durch die Stirnseite definiert ist. **In** ganz besonders vorteilhafter Weise kann die Stirnseite doppelt schräg gegenüber der Aufnahmeebene verlaufen. Dabei ist die Stirnseite sowohl um eine erste Gerade als auch um eine zweite Gerade gekippt, wobei die erste Gerade und die zweite Gerade jeweils in der Aufnahmeebene liegen und rechtwinklig zueinander verlaufen. Somit kann die Aufnahmeebene durch die erste Gerade und die zweite Gerade definiert sein. Durch eine solche Ausgestaltung ist es beispielsweise möglich, dass die Stirnseite sowohl in Richtung der Rückwand als auch in Richtung einer der Seitenwände der Halteeinrichtung geneigt ist, wodurch eine besonders zuverlässige Absaugung realisiert wird, insbesondere wenn die Stirnseite in den Bereich der Ecke von dieser Seitenwand und der Rückwand hineinragt.

In weiter vorteilhafter Weise kann die Stirnseite zumindest während eines Absaugvorgangs mit dem Objektträger und einer Seitenwand der Halteeinrichtung und einer Rückwand der Halteeinrichtung in Kontakt stehen. Dadurch entstehen zwischen diesen drei Berührpunkten kleine Spalte, zwischen denen ein gewisser Anteil an Umgebungsluft eingesogen wird, so dass ein Festsaugen des freien Endes verhindert wird.

Gemäß einer weiteren vorteilhaften Ausgestaltung kann das freie Ende des Absaugmittels, insbesondere die Stirnseite des Absaugmittels, zumindest während eines Absaugvorgangs mit dem Objektträger und mit einer - ggf. abgerundeten - Ecke der Halteeinrichtung in Kontakt stehen, wobei die - ggf. abgerundete - Ecke eine Rückwand und eine Seitenwand der Halteeinrichtung miteinander verbindet. Auch durch diese konstruktive Maßnahme wird gewährleistet, dass der Fluidkanal des Absaugmittels nicht verschlossen wird.

Um eine besonders einfach herzustellende Ausgestaltung zu realisieren, kann das Absaugmittel zumindest bereichsweise als Schlauch oder Röhre ausgebildet sein. Der Schlauch bzw. die Röhre könnte somit derart angeordnet und/oder ausgebildet sein, dass das freie Ende schräg gegenüber der Aufnahmeebene verläuft, zumindest während das Absaugens. In besonders einfacher Weise könnte das freie Ende des Schlauchs oder der Röhre hierzu schräg ausgebildet, beispielsweise schräg abgetrennt sein. In einer bevorzugten Ausgestaltung könnte das Absaugmittel insgesamt als Schlauch oder Röhre ausgebildet sein. Dieses Absaugmittel könnte des Weiteren in einem Schlauchführungselement angeordnet sein. Wesentlich ist dabei, dass die Stirnseite des Absaugmittels nicht parallel zu der Aufnahmeebene verläuft.

In weiter vorteilhafter Weise kann ein Boden der Halteeinrichtung mindestens zwei Ebenen aufweisen, so dass eine obere Bodenfläche und eine untere Bodenfläche realisiert sind. Mit anderen Worten kann der Boden gestuft ausgebildet sein. Die untere Bodenfläche bildet dadurch einen Raum zur Aufnahme der für die Benetzung verwendeten Flüssigkeit, um bei einer länger andauernden in situ Hybridisierung (ISH) eine relativ hoch-feuchte Atmosphäre an der Unterseite des Objektträgers zu erzeugen und über einen definierten Zeitraum zu halten. Somit wird aus der unteren Bodenfläche Flüssigkeit in den Bereich zwischen der oberen Bodenfläche und der Unterseite des Objektträgers nachfließen, wenn die Flüssigkeit in dem Bereich zwischen der oberen Bodenfläche und der Unterseite des Objektträgers verdunstet. Die Begriffe "obere Bodenfläche" und "untere Bodenfläche" beziehen sich dabei auf die Anordnung der Halteeinrichtung während der Verwendung, während der die obere Bodenfläche vertikal gesehen in einer größeren Höhe als die untere Bodenfläche angeordnet ist.

Weiterhin ist es denkbar, dass an der unteren Bodenfläche mindestens ein Auflager ausgebildet ist, das zumindest im Wesentlichen bis zu der Höhe der oberen Bodenfläche aufragt. Dadurch ist gewährleistet, dass ein aufgelegter Objektträger zumindest im Wesentlichen parallel zur unteren und oberen Bodenfläche verläuft bzw. allenfalls geringfügig an der Kante zwischen der oberen Bodenfläche und der unteren Bodenfläche gekippt wird. Sofern an der oberen Bodenfläche eine oder mehrere obere Auflager angeordnet sind, so ist das mindestens eine untere Auflager in vorteilhafter Weise derart ausgebildet, dass die Enden der oberen Auflager und die Enden der unteren Auflager auf der gleichen Höhe liegen.

In weiter vorteilhafter Weise kann das Auflager der unteren Bodenfläche beabstandet von weiteren Elementen der Halteeinrichtung ausgebildet sein, so dass es frei von der unteren Bodenfläche abragt. Dabei bietet es sich an, dass das freistehende Auflager punktförmig ausgestaltet ist. Ein derart solitär stehendes unteres Auflager ist dahingehend von Vorteil, dass es mit den flüssigen Reagenzien nur dann in Kontakt kommt, wenn dies gewollt ist, bspw. als Basin oder Vorratslager für Hilfsreagenzien z. B. Waschpuffer oder Antigen-Retrieval-Lösungen oder im Fall, dass die Reagenzien nicht abgesaugt werden. Im Normalfall wird der Nutzer lediglich ausreichend Volumen auf die obere Bodenplatte der Reagenzien geben, bis diese komplett gefüllt ist. Dadurch werden die teuren Reagenzien im Verbrauch reduziert, was insbesondere im Fall der *in situ* Hybridisierung von Vorteil ist. Der weitere Vorteil des solitär stehenden unteren Auflagers ist, dass Reagenzien nicht an einem solchen unteren Auflager anhaften, wenn der Objektträger zum Absaugen angehoben wird. Es hängt von der Viskosität der einzelnen Reagenzien ab, ob sie an einem Vorsprung (Auflager) anhaften.

Eine Halteeinrichtung, die eine untere und eine obere Bodenfläche umfasst, weist - unabhängig von weiteren Ausgestaltungen der Halteeinrichtung - den Vorteil auf, dass durch eine kürzere obere Bodenfläche in Relation zu einer längeren unteren Bodenfläche ein variables Reagenzien-Volumen definiert werden kann. Weiterhin kann eine in der Länge gleichbleibende, untere Bodenfläche als Reservoir für Reagenzien, insbesondere für Hilfsreagenzien, genutzt werden kann. Als dritter Vorteil stellt sich heraus, dass sofern die Vorrichtung eine Heizeinrichtung zum Erwärmen der in der Halteeinrichtung befindlichen Flüssigkeit aufweist, mit einer einzigen Größe eines Heizkörpers die Temperierung von verschieden großen bzw. verschieden langen Halteeinrichtungen mittels der variablen oberen Bodenfläche möglich ist. Dadurch, dass die Rückwand und damit die Absaugkomponenten immer an der gleichen Stelle bleiben, bedarf es keiner weiteren Konstruktionsänderung.

Dass die längere untere Bodenfläche mit temperiert wird, ist dabei unerheblich. Somit kann auf eine komplizierte und aufwändige Konstruktion mit unterschiedlich großen Heizkörpern verzichtet werden, welchen verschieden lange Halteeinrichtungen mit nur einer Bodenplatte zugeordnet werden müssten.

In besonders vorteilhafter Weise kann an einem Boden der Halteeinrichtung mindestens eine Auflagefläche ausgebildet sein, wobei sich die Auflagefläche von einer Seitenwand bis zu einer Rückwand der Halteeinrichtung erstreckt. Eine solche Auflagefläche kann bei einer Halteeinrichtung, die eine untere und eine obere Bodenfläche aufweist an der oberen Bodenfläche ausgebildet sein, so dass es sich um das voranstehend beschriebene obere Auflager handelt. Sofern ein unteres Auflager vorgesehen ist, kann sich dieses bevorzugt auf die gleiche Höhe erstrecken wie das obere Auflager, so dass ein Objektträger gerade gehalten wird. Durch eine entsprechende flächige Ausgestaltung der Auflagefläche ist es möglich, alle üblichen Größen von Objektträger (beispielsweise die europäische Version mit den Maßen 25 mm x 75 mm sowie die USA verwendete Version mit den Maßen 1 inch x 3 inch), sowie alle Ausgestaltungen der Ecken der Objektträger als Auflagepunkte bzw. Auflageflächen benutzen zu können. Für die spezielle 3-D-Kippbewegung des Objektträgers, wie sie in der DE 10 2016 225 885 A1 beschrieben ist, hat sich diese Ausgestaltung der Auflageflächen als ideal herausgestellt. Dabei sind in idealer Weise in den beiden Ecken zwischen den Seitenwänden und der Rückwand entsprechende Auflageflächen ausgebildet.

Das gemäß Anspruch 1 ausgebildete Absaugmittel könnte in vorteilhafter Weise einen Auslass aufweisen, der von dem Grundkörper des Absaugmittels abragt und/oder als Schlauch bzw. schlauchartig ausgebildet ist. Insbesondere könnte der Auslass - vorzugsweise senkrecht - nach oben verläufen, wenn die Vorrichtung betriebsfertig ist. Hierbei ist es vorstellbar, dass das ständige oder bei Bedarf erzeugte Vakuum in der Form mit dem Absaugmittel verbunden wird, dass ein beweglicher Anschluss bspw. ein Absaugschlauch oder eine -röhre, mittels eines Gelenks oder einer anderen geeigneten Vorrichtung beispielsweise von oben herab auf den Auslass des Absaugmittels gelenkt bzw. gesetzt wird. Dieser Verbindungsvorgang könnte mit dem Einführen der Kassette synchronisiert sein. Der bewegliche Anschluss könnte dabei zu einem Behältnis für gebrauchte Reagenzien führen. Immer dann, wenn die Bearbeitung, beispielsweise ein Färbeprozess, abgeschlossen ist und damit die Kassette entnommen werden soll, könnte ein beweglicher Anschluss sich durch die Entnahme der Kassette wiederum synchron durch die um ein Gelenk führende Lenkung öffnen. Es handelt sich dabei um gegenläufige synchrone Bewegung, wie das Verbinden oder Verschließen von Anschluss und Absaugmittel. Wenn dieser Verschluss- und Öffnungsvorgang mit dem Quetschen des Schlauchs verbunden wird, dann wird der Schlauch beim Verbinden von Anschluss und Absaugmittel der Schlauch gequetscht und beim Öffnen wieder entspannt.

Die Offenbarung betrifft weiterhin ein Absaugmittel für eine Vorrichtung zum Benetzen von biologischem Material mit mindestens einer Flüssigkeit, mit einem freien Ende zum Absaugen der Flüssigkeit das dadurch gekennzeichnet ist, dass die Stirnseite des freien Endes schräg ausgebildet ist und/oder derart anordenbar ist, dass die Stirnseite schräg gegenüber einer Aufnahmeebene für einen Objektträger verläuft.

Dabei ist erkannt worden, dass die Absaugung von Flüssigkeit aus dem Kapillarspalt zwischen der Unterseite des Objektträgers und einem Aufnahmebereich für den Objektträger wesentlich zuverlässiger erfolgt, wenn die Stirnseite des freien Endes schräg ausgebildet ist bzw. derart anordenbar ist, dass sie schräg gegenüber der Aufnahmeebene verläuft.

In Bezug auf das Verfahren wird die zugrundeliegende Aufgabe durch die Merkmale von Anspruch 12 gelöst.

Durch das erfindungsgemäße Verfahren wird auf besonders einfache Weise ermöglicht, das biologische Material mit einer Flüssigkeit zu Benetzen, wobei geringstmögliche Mengen der Flüssigkeit notwendig sind. Im Konkreten ist dabei erkannt worden, dass Flüssigkeit von einer beispielsweise als Reservoir oder Basin dienenden unteren Bodenfläche auf die obere Bodenfläche geleitet werden kann, indem der Objektträger, beispielsweise über eine Wippeoder ein Stößel , angehoben wird. Aufgrund von zwischen der Unterseite des Objektträgers und der Flüssigkeit wirkenden adhäsiven Kräften, wird die Flüssigkeit ebenfalls ausreichend mit angehoben, so dass diese an der Unterseite des Objektträgers entlang auf die obere Bodenfläche fließen kann.

Es wird ausdrücklich darauf hingewiesen, dass die erfindungsgemäße Vorrichtung verfahrensmäßig ausgeprägte Merkmale aufweist, so dass Teil der hier beschriebenen Offenbarung auch ein erfindungsgemäßes Verfahren ist, das ein oder mehrere der in Bezug auf die erfindungsgemäße Vorrichtung beschriebenen Merkmale und Vorteile aufweisen kann.

Die Offenbarung betrifft des Weiteren eine Halteeinrichtung, insbesondere für eine Vorrichtung zum Benetzen von biologischem Material mit wenigstens einer Flüssigkeit, vorzugsweise nach einem der Ansprüche 1 bis 11, wobei die Halteeinrichtung zur Aufnahme eines Objektträgers dient, der das biologische Material trägt, und wobei ein Boden der Halteeinrichtung mindestens zwei Ebenen aufweist, so dass eine obere Bodenfläche und eine untere Bodenfläche realisiert sind. Alternativ oder zusätzlich könnte ein Boden der Halteeinrichtung mindestens zwei Ebenen aufweisen, so dass eine obere Bodenfläche und eine untere Bodenfläche realisiert sind. Hierbei ist es des Weiteren denkbar, dass an der unteren Bodenfläche ein, vorzugsweise frei von der Bodenfläche abragendes, Auflager ausgebildet ist, das zumindest im Wesentlichen bis zu der Höhe der oberen Fläche aufragt.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine perspektivische Ansicht eines Ausführungsbeispiels einer erfindungsgemäßen Vorrichtung zur Benetzung von biologischem Material mit einer Flüssigkeit,
- Fig. 2: in einer schematischen Darstellung eine perspektivische Ansicht eines weiteren Ausführungsbeispiels einer erfindungsgemäßen Vorrichtung zur Benetzung von biologischem Material mit einer Flüssigkeit,
- Fig. 3: in einer schematischen Darstellung eine perspektivische Seitenansicht eines Ausführungsbeispiels eines erfindungsgemäßen Absaugmittels,
- Fig. 4: in einer weiteren schematischen Darstellung eine perspektivische Seitenansicht des Absaugmittels gemäß Fig. 3,
- Fig. 5: in einer weiteren schematischen Darstellung eine perspektivische Seitenansicht des Absaugmittels gemäß Fig. 3,
- Fig.6: in einer schematischen Darstellung eine perspektivische Seitenansicht eines weiteren Ausführungsbeispiels eines erfindungsgemäßen Absaugmittels,
- Fig. 7: in einer weiteren schematischen Darstellung eine perspektivische Seitenansicht des Absaugmittels gemäß Fig. 6,
- Fig. 8: in einer schematischen Darstellung eine perspektivische Ansicht eines Teils des Ausführungsbeispiels einer erfindungsgemäßen Vorrichtung,
- Fig. 9: in einer weiteren schematischen Darstellung eine perspektivische Ansicht eines Teils des Ausführungsbeispiels gemäß Fig. 8,
- Fig. 10: in einer schematischen Darstellung eine perspektivische Seitenansicht einer Halteeinrichtung zur Verwendung in einer erfindungsgemäßen Vorrichtung,
- Fig. 11: in einer weiteren schematischen Darstellung die Halteeinrichtung gemäß Fig. 10,
- Fig. 12: in einer schematischen Darstellung eine perspektivische Seitenansicht einer weiteren Halteeinrichtung zur Verwendung in einer erfindungsgemäßen Vorrichtung,
- Fig. 13: in einer weiteren schematischen Darstellung die Halteeinrichtung gemäß Fig. 12,
- Fig. 14: in einer schematischen Darstellung eine perspektivische Seitenansicht einer weiteren Halteeinrichtung zur Verwendung in einer erfindungsgemäßen Vorrichtung, und
- Fig. 15: in einer schematischen Darstellung eine perspektivische Seitenansicht eines weiteren Ausführungsbeispiels eines erfindungsgemäßen Absaugmittels.

In den Figuren werden gleiche Elemente mit den gleichen Bezugszeichen versehen. Des Weiteren sind zur Verbesserung der Übersichtlichkeit nicht in jeder Figur alle Elemente mit einem Bezugszeichen versehen.

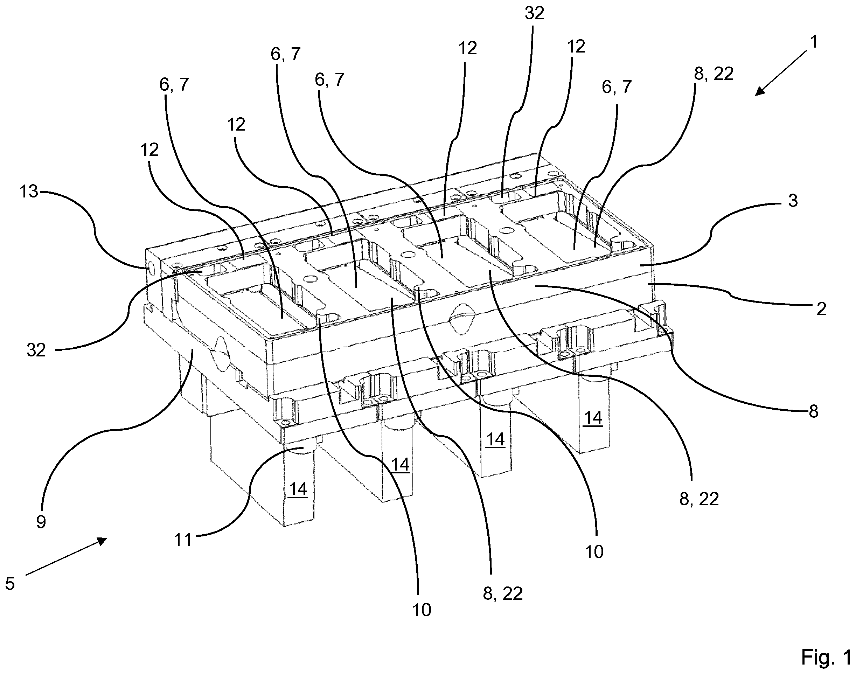

Fig. 1 zeigt in einer schematischen Darstellung eine perspektivische Ansicht einer erfindungsgemäßen Vorrichtung zur Benetzung von biologischem Material mit einer Flüssigkeit, wobei dieses Ausführungsbeispiel generell dazu dient, die allgemeine Funktionsweise einer solchen Vorrichtung zu illustrieren.

Die Vorrichtung weist eine Kassette 1 bestehend aus einem Kassettenboden 2 und einem Kassettendeckel 3 auf. Der Kassettendeckel 3 ist durch eine in diesem Ausführungsbeispiel nicht dargestellte Deckelscheibe 4 abgeschlossen.

Die Kassette 1 ist auf der Konsole 5 angeordnet und weist insgesamt vier Zellen 6 für jeweils eine Halteinrichtungen 7 auf. Auf den Halteeinrichtungen 7 ist jeweils ein Objektträger 8 aufgelegt, der in der Aufnahmeebene 22 liegt bzw. parallel zu dieser verläuft.

Die Konsole 5 weist gemäß Fig. 1 eine Platte 9 auf, die als einzelnes Bauteil ausgebildet ist, wobei die Platte 9 auch mehrteilig ausgestaltet sein können, beispielsweise könnten eine erste Platte und eine zweite Platte vorgesehen sein.

Dabei ist deutlich zu erkennen, dass die Platte 9 schräg ausgebildet ist. Die Schräge kann im Bereich von 1,5° bis 5°, insbesondere von 2° bis 4°, liegen, vorzugsweise 3° betragen. Der schräge Verlauf der Platte 9 kann unabhängig von der weiteren Konstruktion der Vorrichtung ausgebildet sein. Dadurch wird erreicht, dass Flüssigkeit, die in die Halteeinrichtung 7 hinein pipettiert wird, in Richtung einer ggf. in dem Kassettenboden 2 ausgebildeten Überlaufrinne läuft. Zusätzlich wird durch die Schräge ermöglicht, dass etwaige Blasen in der Flüssigkeit besser aufsteigen können.

Des Weiteren sind vier Elektromotoren 11 ausgebildet, die als Antrieb für eine nicht dargestellte Auslenkeinrichtung dienen, über welche die Objektträger 8 in der Kassette 1 ausgelenkt werden können. Um ein Kippen des Objektträgers 8 um dessen Längsachse zu ermöglichen, ist ein Vorsprung 10 vorgesehen, an dem ein Eckbereich des Objektträgers 8 anstößt, wenn der Objektträger 8 angehoben wird.

Zusätzlich ist die Absaugeinrichtung zu erkennen, die die Absaugmittel 12 sowie als Fluidverbindung dienende Schläuche 13 umfasst, über welche die Flüssigkeit aus den einzelnen Halteeinrichtungen 7 absaugbar ist. Hierzu sind die Absaugmittel 12 über Schläuche 13 beispielsweise mit einer Pumpe oder einer anderen Einrichtung zur Erzeugung eines Unterdrucks verbunden. Des Weiteren sind Steuermittel 14, beispielsweise Elektronikboards, angeordnet. Wesentlich ist, dass die Stirnseite 18 des freien Endes 16 von dem Absaugmittel 12 schräg zur der Aufnahmeebene 22 der Halteeinrichtung 7 bzw. zu der Oberseite des darauf angeordneten Objektträgers 8 verläuft. Neben den Absaugmitteln 12 ist jeweils eine Pipettieröffnung 32 ausgebildet, durch welche Flüssigkeit bzw. Reagenzien in/auf die Halteeinrichtung 7 eingebracht/aufgebracht werden kann.

Die Kassette 1 und die Konsole 5 können über nicht dargestellte Magnete miteinander verbunden sein. Ebenso können der Kassettenboden 2 und der Kassettendeckel 3 über Magnete miteinander verbunden sein.

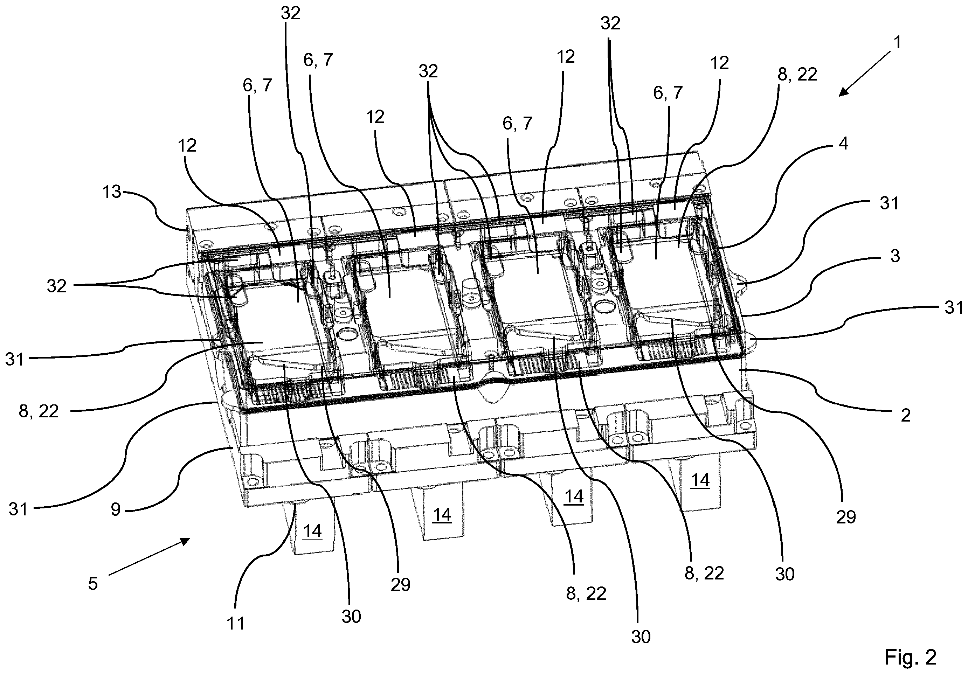

Fig. 2 zeigt ein weiteres Ausführungsbeispiel einer erfindungsgemäßen Vorrichtung. Diese entspricht im Wesentlichen der in Fig. 1 dargestellten Vorrichtung, so dass auf die diesbezügliche Beschreibung verwiesen wird. Der wesentliche Unterschied zu der in Fig. 1 dargestellten Vorrichtung besteht darin, dass der in Fig. 1 als Vorsprung 10 realisierte Anstoßpunkt nunmehr als Strebe 29 realisiert ist, die an ihrer dem Objektträger 8 zugewandten Seite eine Schräge 30 aufweist. Die Schräge 30 dient dabei zur Begrenzung der maximalen Verkippung des Objektträgers 8 um seine Längsachse herum. Somit definiert die Schräge 30 die maximale Drehung. So wird ein maximaler Winkel definiert, bei dem das Absaugen im Verbund mit dem Absaugmittel optimal durchführbar ist. Optimales Absaugen liegt dabei insbesondere dann vor, wenn ein leichter Vakuumsog, schnell (beispielsweise eine maximale Zeitdauer 2 Sekunden) und ohne Rückstände erfolgt. Des Weiteren sind an den Seitenwänden des Kassettendeckels 3 und an dem Kassettenboden 2 jeweils kleine Flügel 31 angebracht, die als Angriffspunkte dienen, so dass die durch Magnetkräfte zusammen gehaltenen Bauteile leichter händisch voneinander zu trennen.

Weiterhin ist in Fig. 2 die transparente Deckelscheibe 4 dargestellt. Eine baugleiche Deckelscheibe 4 kann bei der Vorrichtung gemäß Fig. 1 angeordnet sein. Dabei ist zu erkennen, dass auch in der Deckelscheibe 4 jeweils zwei Pipettieröffnungen 32 für jede Halteeinrichtung 7 ausgebildet sind. Somit sind an jeder Halteeinrichtung 7 jeweils drei Pipettieröffnungen 32 ausgebildet, so dass mehrere Flüssigkeiten besonders einfach vermischt werden können. Die Deckelscheibe 4 kann jedoch auch gar keine, lediglich eine oder mehr als zwei Pipettieröffnungen 32 für jede Halteeinrichtung 7 aufweisen. An den Objektträgern 8 ist in üblicher Weise ein Barcode-Feld 33 ausgebildet, so dass die Objektträger 8 eindeutig identifizierbar sind.

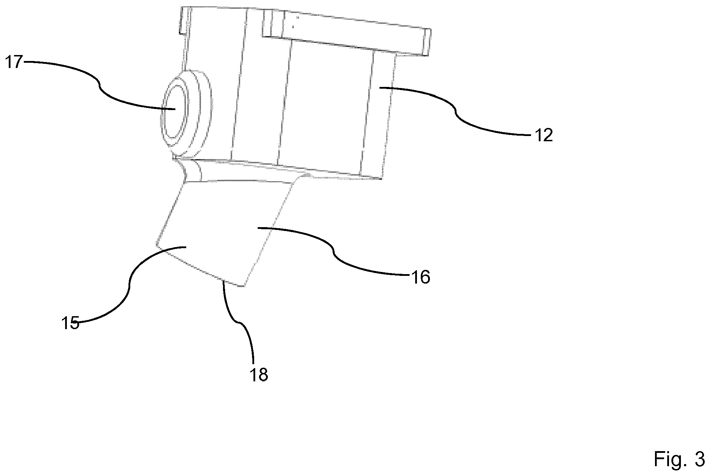

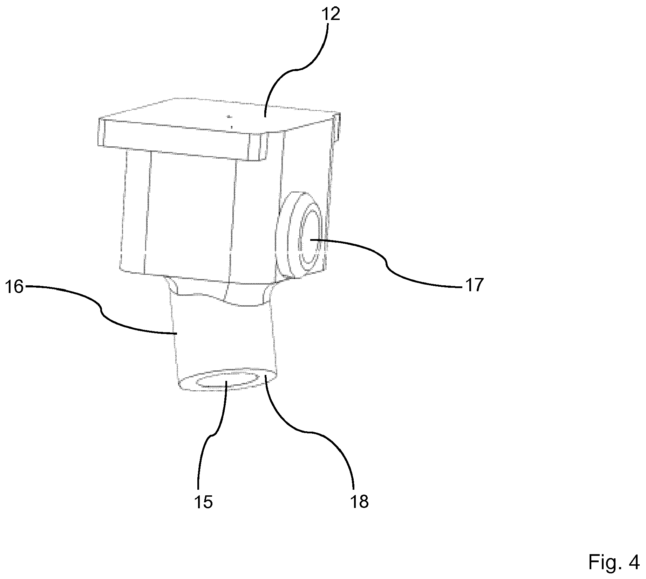

Die Fig. 3 bis 5 zeigen in unterschiedlichen Darstellungen ein Ausführungsbeispiel eines erfindungsgemäßen Absaugmittels 12. Das Absaugmittel 12 weist einen Absaugkanal auf, der sich von dem Fluideingang 15 des freien Endes 16 zu dem Fluidausgang 17 erstreckt. Dabei ist deutlich zu erkennen, dass das freie Ende 16 schräg ausgebildet ist, so dass, wenn das Absaugmittel 12 beispielsweise in einer Vorrichtung gemäß Fig. 1 angeordnet ist, die Stirnseite 18 nicht parallel zu der Aufnahmeebene 22 verläuft. Da die Stirnseite 18 schräg zu der Aufnahmeebene 22 der Halteeinrichtung 7 bzw. zu der Oberseite des darauf angeordneten Objektträgers 8 verläuft, wird erreicht, dass sich die Stirnseite 18 nicht an dem Objektträger 8 und/oder der Halteeinrichtung 7 festsaugt, so dass Flüssigkeit äußerst zuverlässig abgesaugt werden kann. Dabei ist es denkbar, dass das freie Ende 16 derart gegenüber der Halteeinrichtung 7 angeordnet ist, dass es in eine Ecke 19 der Halteeinrichtung 7 hineinragt, die durch eine Seitenwand 19 und eine Rückwand 20 gebildet ist.

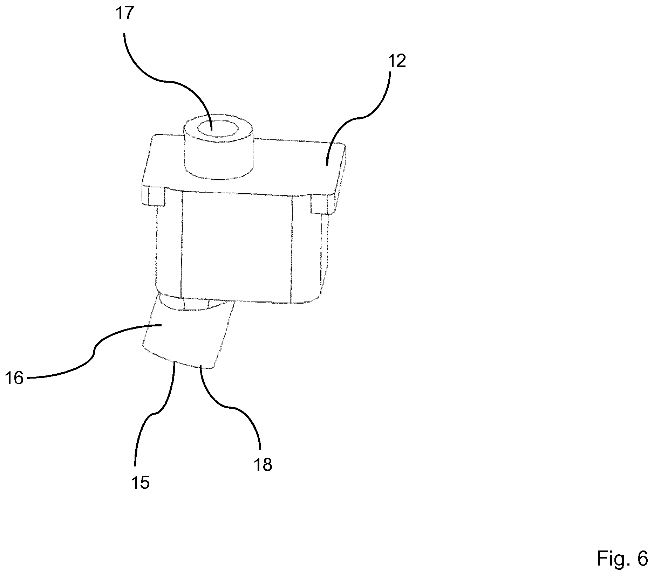

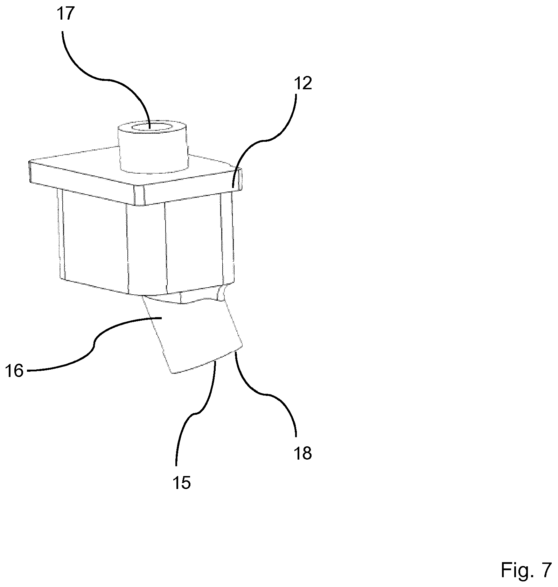

Die Fig. 6 und 7 zeigen in unterschiedlichen Darstellungen ein weiteres Ausführungsbeispiel einer erfindungsgemäßen Absaugmittels 12. Das Absaugmittel 12 weist dabei einen Fluidausgang 17 auf, der sich im in die betriebsfertige Vorrichtung installierten Zustand zumindest im Wesentlichen nach oben, d.h. senkrecht, erstreckt. Ein solches Absaugmittel 12 eignet sich insbesondere dazu, dass das ständige oder bei Bedarf erzeugte Vakuum in der Form mit dem Absaugmittel 12 verbunden wird, dass ein beweglicher Anschluss bspw. ein Absaugschlauch oder eine -röhre, mittels eines Gelenks oder einer anderen geeigneten Einrichtung beispielsweise von oben herab auf den Auslass des Absaugmittels gelenkt bzw. gesetzt wird. Dieser Verbindungsvorgang könnte mit dem Einführen der Kassette synchronisiert sein.

Des Weiteren entspricht das in den Fig. 6 und 7 gezeigte Absaugmittel 12 der Ausführungsform gemäß den Fig. 3 bis 5, so dass zur Vermeidung von Wiederholungen auf die diesbezügliche Beschreibung verwiesen wird.

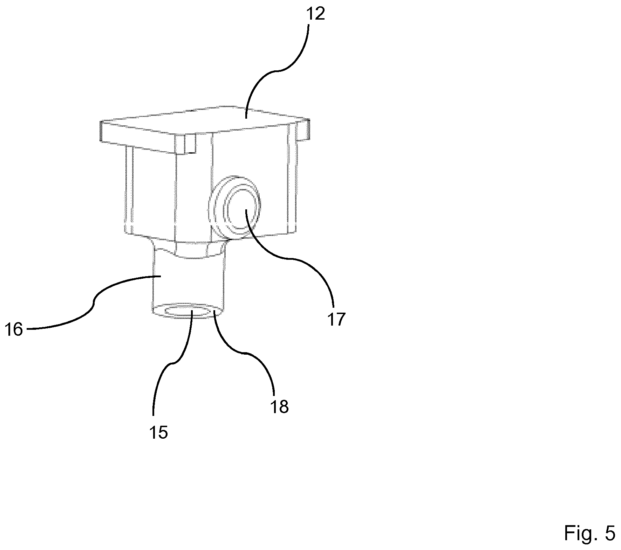

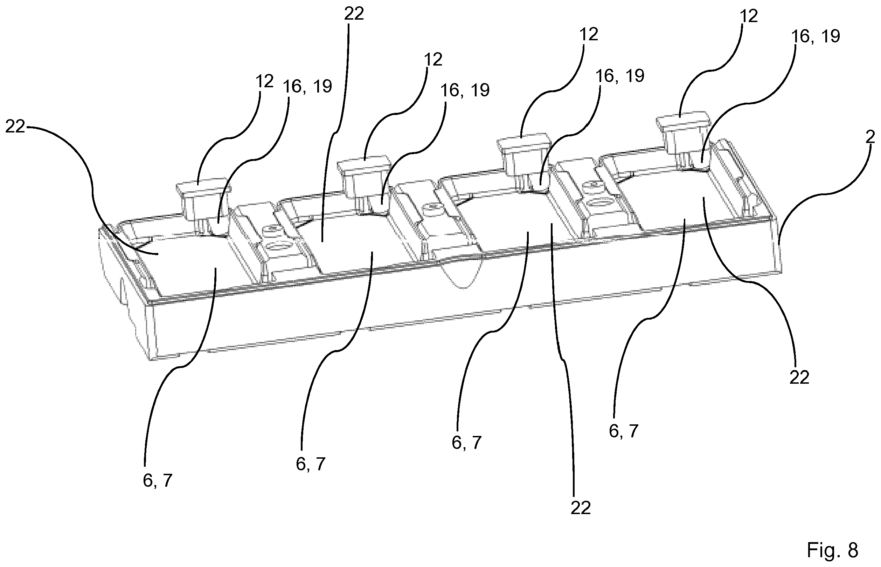

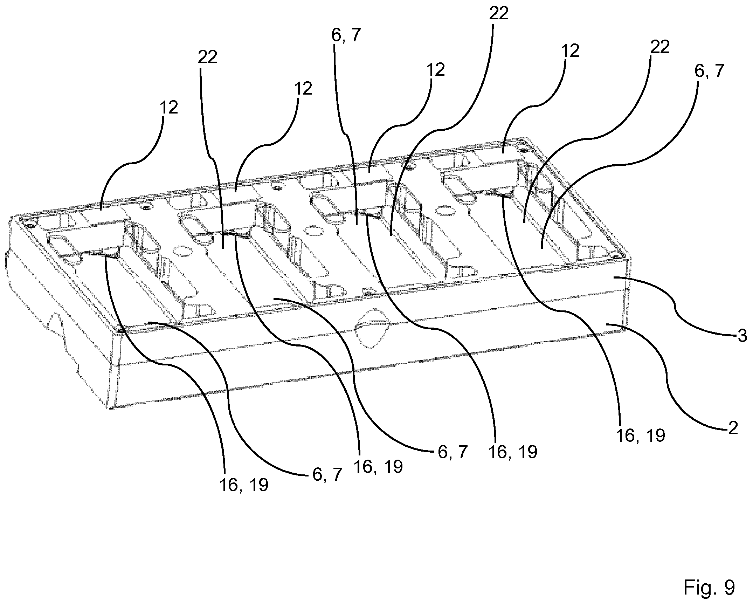

In den Fig. 8 und 9 ist in schematischen Darstellungen ein Teil einer erfindungsgemäßen Vorrichtung dargestellt. Im Konkreten zeigt Fig. 8 einen Kassettenboden 2 mit vier Zellen 6, in welchen jeweils eine Halteeinrichtung 7 aufgenommen ist. Die Anzahl der Zellen 6 kann geringer oder höher ausgebildet sein, beispielsweise kann auch lediglich eine einzige Zelle 6 und somit eine einzige Halteeinrichtung 7 vorgesehen sein. Des Weiteren ist dargestellt, wie die Absaugmittel 12 während des Absaugvorgangs angeordnet sind. Die Absaugmittel 12 entsprechen den in den Fig. 5 bis 7 dargestellten Absaugmitteln 12 und sind jeweils derart gegenüber einer Halteeinrichtung 7 positioniert, dass das freie Ende 16 in die Ecke 19 der Halteeinrichtung 7 ragt, wobei die Stirnseite 18 nicht parallel, sondern geneigt bzw. schräg gegenüber der Aufnahmeebene 22 verläuft.

Fig. 9 zeigt den Kassettenboden 2 nebst Halteeinrichtung 7 und Absaugmitteln 12 gemäß Fig. 8 sowie einen Kassettendeckel 3. **In** dem in Fig. 5 nicht gezeigten Kassettendeckel 3 sind die Absaugmittel 12 angeordnet, so dass diese im geschlossenen Zustand in die Ecken 19 der Halteeinrichtungen 7 ragen. Somit verlaufen die Stirnseiten 18 der Absaugmittel 12 nicht parallel zu den Aufnahmeebenen 22, sondern vielmehr schräg bzw. geneigt.

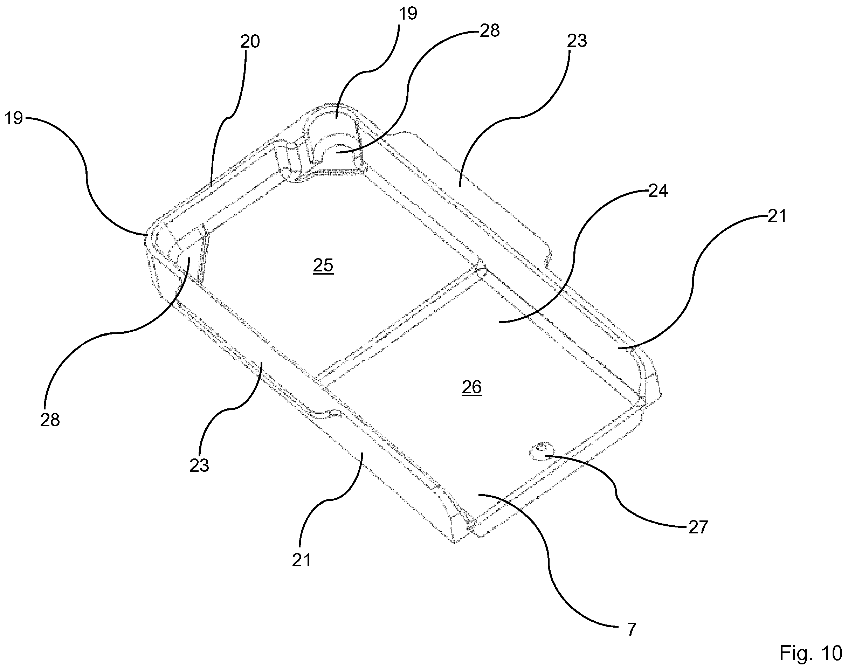

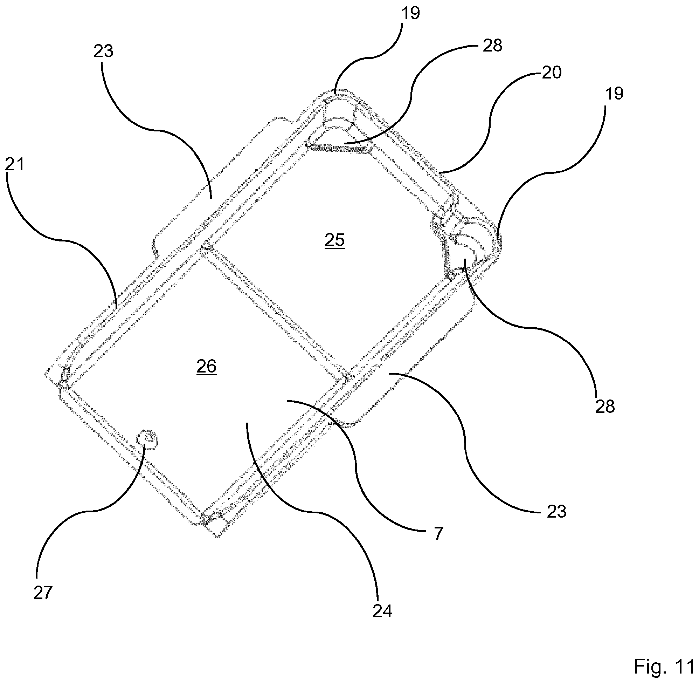

Die Fig. 10 und 11 zeigen ein Ausführungsbeispiel einer Halteeinrichtung 7. Die Halteeinrichtung 7 weist zwei Seitenwände 21 und eine Rückwand 20 auf. An den Seitenwänden 21 sind Auflageflügel 23 ausgebildet, mit welchen die Halteeinrichtung 7 in/an den Zellen 7 aufliegt. Des Weiteren ist deutlich zu erkennen, dass der Boden 24 eine obere Bodenfläche 25 und eine untere Bodenfläche 26 aufweist. Die untere Bodenfläche 26 dient dabei als Reservoir zur Aufnahme von Flüssigkeit. Wenn die Flüssigkeit auf der oberen Bodenfläche 25 verdampft, wird die Flüssigkeit aus diesem Reservoir hochgezogen. An der unteren Bodenfläche 26 ist weiterhin ein Auflager 27 für den Objektträger 8 ausgebildet. Das Auflager 27 ist hier punktförmig realisiert, kann aber auch flächig oder linienförmig ausgebildet sein. Auch können mehrere, ggf. unterschiedlich gestaltete Auflager 27 angeordnet sein. In den Ecken 19 sind jeweils Auflageflächen 28 ausgebildet. Insgesamt liegt der Objektträger 8 somit auf dem Auflager 27 sowie den Auflageflächen 28 auf, so dass die freien Enden des Auflagers 27 sowie der Auflageflächen 28 die Aufnahmeebene 22 definieren.

In den Fig. 10 und 11 ist des Weiteren deutlich zu erkennen, dass die Auflageflächen 28 jeweils von einer Seitenwand 21 zu der Rückwand 20 erstrecken und somit - abhängig von der Ausgestaltung der Ecke 19 - im Wesentlichen dreieckig bzw. als dreieckig mit Halbrund im Scheitel ausgebildet sind. Somit können Objektträger 8 mit unterschiedlichen Bemaßungen - beispielsweise sowohl 25 mm x 75 mm als auch 1 inch x 3 inch - aufgenommen werden.

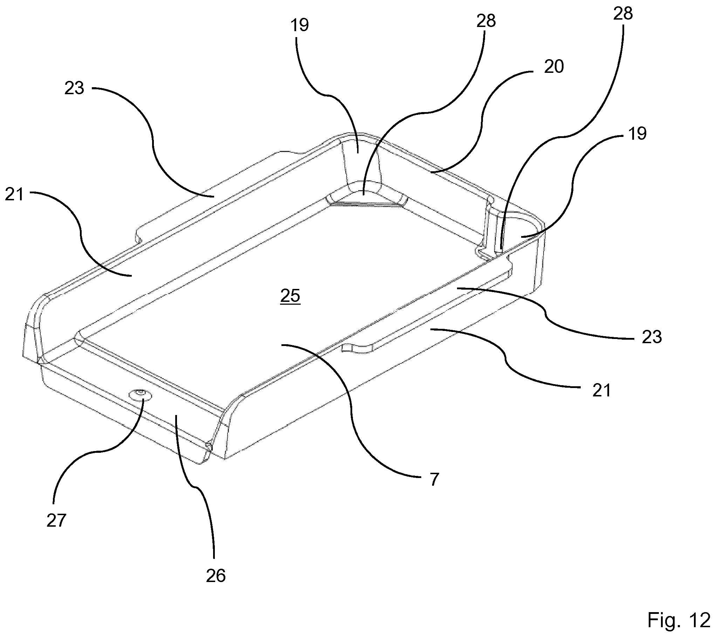

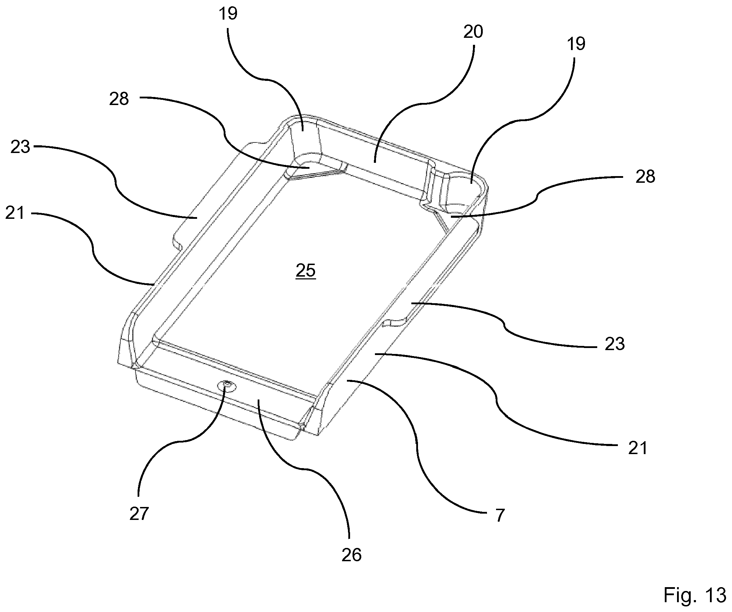

In den Fig. 12 und 13 ist ein weiteres Ausführungsbeispiel einer Halteeinrichtung 7 dargestellt. Diese entspricht der in den Fig. 10 und 11 gezeigten Halteeinrichtung 7, mit dem Unterschied, dass die obere Bodenfläche 25 wesentlich größer bzw. länger ausgebildet ist als die untere Bodenfläche 26. Beispielsweise könnte die obere Bodenfläche 25 eine Länge (Richtung von Rückwand 20 zu Auflager 27) von 55 mm aufweisen. Dadurch können Reagenzien bis an das Barcode-Feld eines Objektträgers reichen, auch wenn dieser ein relativ großes Barcode-Feld aufweist. Eine Halteeinrichtung 7 gemäß den Fig. 12 und 13 kann derart betrieben werden, dass das Auflager 27 nicht bzw. kaum mit der Flüssigkeit in Berührung kommt

Des Weiteren wird auf die Beschreibung der Fig. 10 und 11 verwiesen, die analog für die Fig. 12 und 13 gilt.

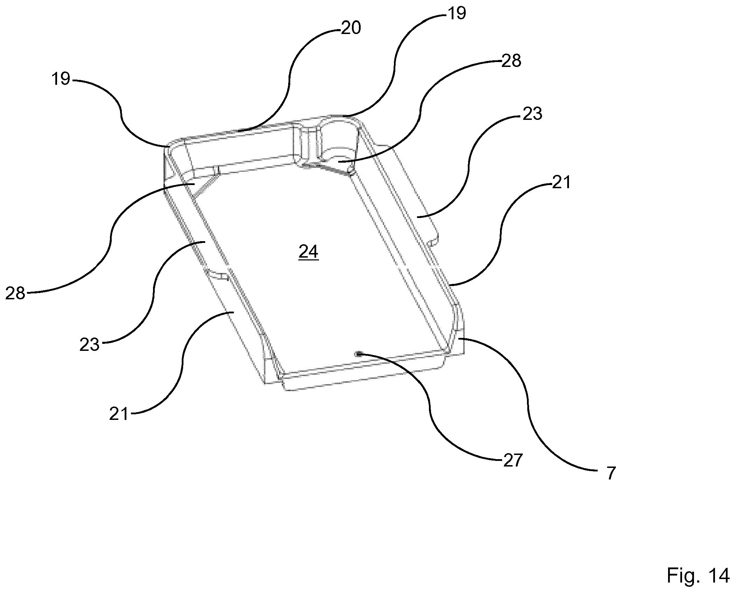

In Fig. 14 ist ein weiteres Ausführungsbeispiel einer Halteeinrichtung 7 dargestellt. Diese entspricht der in den Fig. 10 und 11 gezeigten Halteeinrichtung 7, mit dem Unterschied, dass der Boden 24 eine einzige, durchlaufende Bodenfläche aufweist. Des Weiteren wird auf die Beschreibung der Fig. 10 und 11 verwiesen, die analog für Fig. 14 gilt.

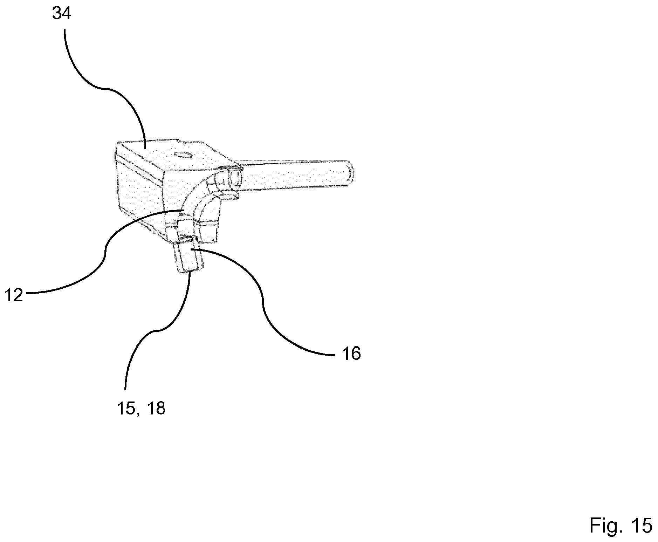

Fig. 15 zeigt ein weiteres Ausführungsbeispiel eines erfindungsgemäßen Absaugmittels 12. Das Absaugmittel 12 ist als Schlauch ausgebildet, der einen Absaugkanal definiert, welcher sich von dem Fluideingang 15 des freien Endes 16 erstreckt. Dabei ist deutlich zu erkennen, dass das freie Ende 16 schräg ausgebildet ist, so dass, wenn das Absaugmittel 12 beispielsweise in einer Vorrichtung gemäß Fig. 1 angeordnet ist, die Stirnseite 18 nicht parallel zu der Aufnahmeebene 22 verläuft. Somit entspricht das Ausführungsbeispiel gemäß Fig. 15 im Wesentlichen dem in den Fig. 3 bis 5 gezeigten Ausführungsbeispiel mit dem Unterschied, dass das Absaugmittel 12 insgesamt durch einen Schlauch realisiert ist, der in einem Schlauchführungselement 34 angeordnet ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Kassette
- 2: Kassettenboden
- 3: Kassettendeckel
- 4: Deckelscheibe
- 5: Konsole
- 6: Zellen
- 7: Halteeinrichtung
- 8: Objektträger
- 9: Platte
- 10: Vorsprung
- 11: Elektromotor
- 12: Absaugmittel
- 13: Schlauch
- 14: Steuermittel
- 15: Fluideingang
- 16: freies Ende
- 17: Fluidausgang
- 18: Stirnseite
- 19: Ecke
- 20: Rückwand
- 21: Seitenwand
- 22: Aufnahmeebene
- 23: Auflageflügel
- 24: Boden
- 25: obere Bodenfläche
- 26: untere Bodenfläche
- 27: Auflager
- 28: Auflagefläche
- 29: Strebe
- 30: Schräge
- 31: Flügel
- 32: Pipettieröffnung
- 33: Barcode-Feld
- 34: Schlauchführungselement

## Patentansprüche

1. Vorrichtung zum Benetzen von biologischem Material mit wenigstens einer Flüssigkeit, mit mindestens einer Halteeinrichtung (7) und mindestens einem Absaugmittel (12), wobei die Halteeinrichtung (7) einen Boden (24) aufweist und dazu ausgebildet ist, einen Objektträger (8) in einer Aufnahmeebene (22) aufzunehmen, wobei der Objektträger (8) das biologische Material trägt, wobei das Absaugmittel (12) zum Absaugen von Flüssigkeit aus einem Kapillarspalt zwischen dem Objektträger (8) und dem Boden (24) dient, und wobei eine Stirnseite (18) des Absaugmittels (12) nicht parallel zu der Aufnahmeebene (22) verläuft,
**dadurch gekennzeichnet, dass** die Stirnseite (18) insgesamt in einer einzigen Ebene verläuft oder dass die Stirnseite (18) konkav oder konvex ausgebildet ist.

2. Vorrichtung nach Anspruch 1, **dadurch gekennzeichnet, dass** die Stirnseite (18) schräg gegenüber der Aufnahmeebene (22) verläuft.

3. Vorrichtung nach Anspruch 1 oder 2, **dadurch gekennzeichnet, dass** die Stirnseite (18) schräg ausgebildet ist, und / oder
**dadurch gekennzeichnet, dass** die Stirnseite (18) unter einem Winkel im Bereich von 5° bis 45°, insbesondere von 5° bis 40°, vorzugsweise von 10° bis 30° gegenüber der Aufnahmeebene (22) verläuft.

4. Vorrichtung nach einem der Ansprüche 1 bis 3, **dadurch gekennzeichnet, dass** die Stirnseite (18) zumindest während eines Absaugvorgangs mit dem Objektträger (8) und einer Seitenwand (21) der Halteeinrichtung (7) und einer Rückwand (20) der Halteeinrichtung (7) in Kontakt steht.

5. Vorrichtung nach einem der Ansprüche 1 bis 4, **dadurch gekennzeichnet, dass** ein freies Ende (16) des Absaugmittels (12), insbesondere die Stirnseite (18) des Absaugmittels (12), zumindest während eines Absaugvorgangs mit dem Objektträger (8) und mit einer ggf. abgerundeten Ecke (19) der Halteeinrichtung in Kontakt steht, wobei die ggf. abgerundete Ecke (19) eine Rückwand (20) und eine Seitenwand (21) der Halteeinrichtung (7) miteinander verbindet.

6. Vorrichtung nach einem der Ansprüche 1 bis 5, **dadurch gekennzeichnet, dass** das Absaugmittel (12) zumindest bereichsweise als Schlauch oder Röhre ausgebildet ist, vorzugsweise, dass das Absaugmittel (12) insgesamt als Schlauch oder Röhre ausgebildet ist.

7. Vorrichtung nach einem der Ansprüche 1 bis 6, **dadurch gekennzeichnet, dass** der Boden (24) der Halteeinrichtung (7) mindestens zwei Ebenen aufweist, so dass eine obere Bodenfläche (25) und eine untere Bodenfläche (26) realisiert sind.

8. Vorrichtung nach Anspruch 7, **dadurch gekennzeichnet, dass** an der unteren Bodenfläche (26) ein Auflager (27) ausgebildet ist, wobei das Auflager vorzugsweise zumindest im Wesentlichen auf bis zu der Höhe der oberen Bodenfläche (25) aufragt.

9. Vorrichtung nach Anspruch 8, **dadurch gekennzeichnet, dass** das Auflager (27) beabstandet von weiteren Elementen der Halteeinrichtung (7) ausgebildet ist, so dass es frei von der unteren Bodenfläche (26) abragt.

10. Vorrichtung nach einem der Ansprüche 1 bis 9, **dadurch gekennzeichnet, dass** an dem Boden (24) der Halteeinrichtung (7) mindestens eine Auflagefläche (28) ausgebildet ist, wobei sich die Auflagefläche (28) von einer Seitenwand (21) bis zu einer Rückwand (20) der Halteeinrichtung (7) erstreckt.

11. Vorrichtung nach einem der Ansprüche 1 bis 10, **dadurch gekennzeichnet, dass** eine Heizeinrichtung mit mindestens einem Heizelement zum Erwärmen der mindestens einen Halteeinrichtung (7) angeordnet ist, wobei das Heizelement derart dimensioniert ist, den gesamten Boden (24) der Halteeinrichtung (7) und/oder ggf. die gesamte obere Bodenfläche (25) der Halteeinrichtung (7) unabhängig von deren Größe ausreichend zu erwärmen.

12. Verfahren zum Benetzen von biologischem Material mit mindestens einer Flüssigkeit, wobei in einer Vorrichtung nach einem der Ansprüche 1 bis 11 mit einer Halteeinrichtung (7) umfassend einen gestuften Boden (24) mit einer oberen Bodenfläche (25) und einer unteren Bodenfläche (26) ein von dem Boden (24) gehaltener Objektträger (8) angeordnet ist, wobei der Objektträger (8) von der Halteeinrichtung (7) abgehoben wird, so dass auf der unteren Bodenfläche (26) befindliche Flüssigkeit auf die obere Bodenfläche (25) geleitet wird.

## Claims

1. A device for wetting biological material with at least one liquid, comprising at least one retaining device (7) and at least one suction means (12), wherein the retaining device (7) has a base (24) and is designed to hold a specimen slide (8) in a holding plane (22), wherein the specimen slide (8) supports the biological material, wherein the suction means (12) is used to suction liquid from a capillary gap between the specimen slide (8) and the base (24), and wherein an end-face side (18) of the suction means (12) does not extend in parallel with the holding plane (22),
**characterized in that** the end-face side (18) as a whole extends in a single plane, or that the end-face side (18) has a concave or convex design.

2. The device according to claim 1, **characterized in that** the end-face side (18) extends at an angle to the holding plane (22).

3. The device according to claim 1 or 2, **characterized in that** the end-face side (18) has an angled design, and/or
**characterized in that** the end-face side (18) extends at an angle in the range of 5° to 45°, in particular 5° to 40°, preferably 10° to 30°, with respect to the holding plane (22).

4. The device according to one of claims 1 through 3, **characterized in that** the end-face side (18) is in contact with the specimen slide (8) and a side wall (21) of the retaining device (7) and a rear wall (20) of the retaining device (7), at least during a suction operation.

5. The device according to one of claims 1 through 4, **characterized in that** a free end (16) of the suction means (12), in particular the end-face side (18) of the suction means (12), is in contact with the specimen slide (8) and with an optionally rounded corner (19) of the retaining device, at least during a suction operation, wherein the optionally rounded corner (19) connects a rear wall (20) and a side wall (21) of the retaining device (7) to one another.

6. The device according to one of claims 1 through 5, **characterized in that** the suction means (12) is designed as a hose or tube, at least in areas, preferably that the suction means (12) as a whole is designed as a hose or tube.

7. The device according to one of claims 1 through 6, **characterized in that** the base (24) of the retaining device (7) has at least two planes, thus implementing an upper base surface (25) and a lower base surface (26).

8. The device according to claim 7, **characterized in that** a support (27) is provided at the lower base surface (26), wherein the support preferably rises, at least substantially, to the height of the upper base surface (25).

9. The device according to claim 8, **characterized in that** the support (27) is spaced apart from other elements of the retaining device (7) so that it protrudes freely from the lower base surface (26).

10. The device according to one of claims 1 through 9, **characterized in that** at least one support surface (28) is provided at the base (24) of the retaining device (7), wherein the support surface (28) extends from a side wall (21) to a rear wall (20) of the retaining device (7).

11. The device according to one of claims 1 through 10, **characterized in that** a heating unit having at least one heating element for heating the at least one retaining device (7) is provided, wherein the heating element is dimensioned to sufficiently heat the entire base (24) of the retaining device (7) and/or optionally the entire upper base surface (25) of the retaining device (7), regardless of its size.

12. A method for wetting biological material with at least one liquid, wherein a specimen slide (8) that is held by the base (24) is situated in a device according to one of claims 1 through 11, said device comprises a retaining device (7) with a stepped base (24) having an upper base surface (25) and a lower base surface (26), wherein the specimen slide (8) is lifted from the retaining device (7) so that liquid that is present on the lower base surface (26) is led to the upper base surface (25).

## Revendications

1. Dispositif destiné à mouiller un matériau biologique au moyen d'au moins un liquide, comprenant au moins un dispositif de maintien (7) et au moins un moyen d'aspiration (12), le dispositif de maintien (7) comportant un fond (24) et étant conçu pour recevoir un porte-objet (8) dans un plan de réception (22), le porte-objet (8) portant le matériau biologique, le moyen d'aspiration (12) servant à aspirer du liquide à partir d'un interstice capillaire entre le porte-objet (8) et le fond (24), et une face frontale (18) du moyen d'aspiration (12) n'étant pas parallèle au plan de réception (22),
**caractérisé en ce que** la face frontale (18) s'étend entièrement dans un seul plan ou **en ce que** la face frontale (18) présente une forme concave ou convexe.

2. Dispositif selon la revendication 1, **caractérisé en ce que** la face frontale (18) s'étend obliquement par rapport au plan de réception (22).

3. Dispositif selon la revendication 1 ou 2, **caractérisé en ce que** la face frontale (18) est inclinée, et/ou **caractérisé en ce que** la face frontale (18) s'étend selon un angle compris entre 5° et 45°, notamment entre 5° et 40°, de préférence entre 10° et 30°, par rapport au plan de réception (22).

4. Dispositif selon l'une des revendications 1 à 3, **caractérisé en ce que** la face frontale (18) est en contact, au moins pendant une opération d'aspiration, avec le porte-objet (8), une paroi latérale (21) du dispositif de maintien (7) et une paroi arrière (20) du dispositif de maintien (7).

5. Dispositif selon l'une des revendications 1 à 4, **caractérisé en ce qu'**une extrémité libre (16) du moyen d'aspiration (12), en particulier la face frontale (18) du moyen d'aspiration (12), est en contact, au moins pendant une opération d'aspiration, avec le porte-objet (8) et avec un angle éventuellement arrondi (19) du dispositif de maintien, l'angle éventuellement arrondi (19) reliant une paroi arrière (20) et une paroi latérale (21) du dispositif de maintien (7).

6. Dispositif selon l'une des revendications 1 à 5, **caractérisé en ce que** le moyen d'aspiration (12) est réalisé au moins partiellement sous forme de tuyau souple ou de tube, de préférence entièrement sous forme de tuyau souple ou de tube.

7. Dispositif selon l'une des revendications 1 à 6, **caractérisé en ce que** le fond (24) du dispositif de maintien (7) présente au moins deux niveaux, de sorte qu'une surface de fond supérieure (25) et une surface de fond inférieure (26) sont formées.

8. Dispositif selon la revendication 7, **caractérisé en ce qu'**un support (27) est formé sur la surface de fond inférieure (26), le support faisant saillie de préférence au moins sensiblement jusqu'au niveau de la surface de fond supérieure (25).

9. Dispositif selon la revendication 8, **caractérisé en ce que** le support (27) est disposé à distance d'autres éléments du dispositif de maintien (7), de sorte qu'il fait librement saillie de la surface de fond inférieure (26).

10. Dispositif selon l'une des revendications 1 à 9, **caractérisé en ce qu'**au moins une surface d'appui (28) est formée sur le fond (24) du dispositif de maintien (7), la surface d'appui (28) s'étendant d'une paroi latérale (21) jusqu'à une paroi arrière (20) du dispositif de maintien (7).

11. Dispositif selon l'une des revendications 1 à 10, **caractérisé en ce qu'**un dispositif de chauffage comprenant au moins un élément chauffant est prévu pour chauffer l'au moins un dispositif de maintien (7), l'élément chauffant étant dimensionné de manière à chauffer suffisamment l'ensemble du fond (24) du dispositif de maintien (7) et/ou, le cas échéant, l'ensemble de la surface de fond supérieure (25) du dispositif de maintien (7), indépendamment de ses dimensions.

12. Procédé destiné à mouiller un matériau biologique au moyen d'au moins un liquide, dans lequel, dans un dispositif selon l'une des revendications 1 à 11 comprenant un dispositif de maintien (7) comportant un fond étagé (24) avec une surface de fond supérieure (25) et une surface de fond inférieure (26), un porte-objet (8) maintenu par le fond (24) est disposé, le porte-objet (8) étant soulevé par rapport au dispositif de maintien (7) de sorte que le liquide présent sur la surface de fond inférieure (26) soit amené sur la surface de fond supérieure (25).
